# EUROPÄISCHE PATENTSCHRIFT

(11) **EP 3 453 441 B1**
(45) Veröffentlichungstag und Bekanntmachung des Hinweises auf die Patenterteilung: **02.09.2020**
(21) Anmeldenummer: 17189948.7
(22) Anmeldetag: 07.09.2017
(51) Int. Cl.: B01D 46/00, B01D 46/02

(54) **TASCHENFILTERELEMENT**
BAG FILTER ELEMENT
ÉLÉMENT DE FILTRE À POCHE

(43) Veröffentlichungstag der Anmeldung: 13.03.2019
(73) Patentinhaber: Carl Freudenberg KG, 69469 Weinheim (DE)
(72) Erfinder: Sieh, Maik, 69207 Sandhausen (DE); Herberg, Felix, 64646 Heppenheim (DE); Wiegand, Hans, 64658 Fuerth (DE)

(56) Entgegenhaltungen:
- DE-A1-102014 004 810
- DE-U1- 9 103 538
- DE-U1-202008 006 834
- US-A- 5 632 791
- US-A1- 2010 058 721

## Beschreibung

Die Erfindung betrifft Filterelemente umfassend einen Rahmen und eine Filtertasche, wobei der Rahmen einen umlaufenden Elastomerkörper aufweist, in den ein Verstärkungselement eingebettet ist, wobei der Rahmen mit der Öffnung der Filtertasche verbunden ist und wobei die Verbindung stoffschlüssig durch den Elastomerkörper erfolgt. Die Erfindung betrifft weiterhin ein Verfahren zur Herstellung von Filterelementen, deren Verwendung und Vorrichtungen umfassend die Filterelemente.

### Stand der Technik

Filterelemente der genannten Art werden im Allgemeinen als Taschenfilter bezeichnet. Sie werden zur Filtration von Fluiden, insbesondere von Luft, verwendet. Hierzu werden die Filterelemente üblicherweise in Filtergehäuse eingesetzt. Um eine effiziente Filtration zu gewährleisten, muss sowohl die Verbindung von Filtertasche und Rahmen innerhalb des Filterelementes, als auch die Verbindung zwischen dem Rahmen des Filterelements und dem Filtergehäuse eine hohe Dichtigkeit aufweisen. Um diese zu gewährleisten, werden üblicherweise zusätzliche Dichtungen eingesetzt. Weiterhin ist es üblich, die Filtertasche mit dem Rahmen zu verkleben. Um eine effiziente Filtration zu gewährleisten, sollte weiterhin eine möglichst große Fläche des Filtermaterials von dem zu filtrierenden Fluid durchströmt werden. Insbesondere bei geringen Volumenströmen kann die Filtertasche jedoch kollabieren, wodurch die durchströmte Fläche des Filters signifikant verkleinert wird und die Filtrationseffizienz stark abnimmt.

Der Stand der Technik versucht die genannten Probleme auf verschiedene Arten zu lösen.

Die DE 6908374 U offenbart ein Taschenfilterelement umfassend mehrere Filtertaschen in Einzelgehäusen, die in einen Filterrahmen verschweißt werden. Die einzelnen Filtertaschen werden durch einen Stützkörper gebildet, in welchen eine Filtermatte eingelegt ist, die mittels eines Klemmrahmens zur Abdichtung gegen den Stützkörper gepresst wird. Da eine kraftschlüssige Verbindung des Filtermaterials mit der Rahmenkonstruktion erfolgt, können an den Kontaktstellen prinzipiell jedoch Undichtigkeiten auftreten. Die offenbarte Konstruktion verhindert zwar ein Kollabieren der Tasche bei geringen Volumenströmen, ist aber konstruktiv sehr aufwendig, da eine Vielzahl von Metallteilen zusammengefügt werden muss. Um einen dichten Einbau der offenbarten Filtereinheit in ein Filtergehäuse zu gewährleisten, muss eine zusätzliche Dichtung auf den Rahmen des Filterelements aufgesetzt werden.

Die WO 2011/133098 A1 offenbart ebenfalls Taschenfilterelemente umfassend mehrere Filtertaschen. Die Filtertaschen werden zwischen zwei Hilfsrahmen und einem Trägerrahmen eingeklemmt. Die Filtertaschen werden untereinander mittels einer Klemmschiene verbunden. Da bei der offenbarten Konstruktion ebenfalls eine kraftschlüssige Verbindung des Filtermaterials mit der Rahmenkonstruktion erfolgt, können an den Kontaktstellen prinzipiell Undichtigkeiten auftreten. Des Weiteren werden bei der offenbarten Konstruktion mindestens drei unterschiedliche Rahmenteile benötigt, die in mehreren Schritten zusammengesetzt werden müssen und die Montage des Filterelements entsprechend aufwendig machen. Ein Kollabieren der Filtertaschen bei geringen Volumenströmen wird durch die offenbarte Konstruktion nicht verhindert.

Die DE 20 2008 006 834 U1 offenbart Taschenfilterelemente mit mehreren Filtertaschen und einem Rahmen aus Polyurethan, in den eine Armierung aus Metall zur Versteifung eingebettet ist. Die Filtertasche wird durch Anschäumen mit dem Polyurethanrahmen verbunden, um eine dichte Verbindung zwischen Rahmen und Filtertasche zu bewirken. Dabei ist nachteilig, dass das Herstellungsverfahren relativ aufwändig ist, weil in einem ersten Schritt der Rahmen durch Einbettung der Armierung in das Polyurethan hergestellt werden muss, und in einem weiteren Schritt die Filtertasche an den Rahmen geschäumt wird. Nachteilig ist auch, dass ein zusätzliches Material zum Anschäumen benötigt wird. In den Filtertaschen können Abstandshalter beidseitig oder wechselseitig an je einer Wandung der Filtertasche angeordnet sein, wodurch ein Zusammenfallen der Filtertaschen verhindert werden soll. Die Abstandshalter sind mittels Schweiß- oder Klebeverbindungen mit den Wänden der Filtertasche verbunden. Die Filtertaschen weisen jedoch den Nachteil auf, dass die Abstandshalter in einem zusätzlichen Herstellungsschritt mit den Wänden der Filtertasche verklebt oder verschweißt werden müssen.

Die US 4,356,011 offenbart Taschenfilterelemente mit mehreren Filtertaschen. In die Filtertaschen sind Verstrebungen aus Filtermaterial eingenäht, welche die Wände innerhalb der einzelnen Filtertaschen verbinden und so die Filtertaschenformen stabilisieren und einen Kontakt der einzelnen Filtertaschen untereinander verhindern. Die entsprechende Formgebung ist jedoch vom Fluidstrom abhängig und löst daher nicht das Problem des Kollabierens der Filtertaschen bei geringen Volumenströmen. Weiterhin stellt das Vernähen der Verstrebungen mit den Wänden der Filtertasche einen zusätzlichen und aufwendigen Herstellungsschritt dar.

Der Stand der Technik weist somit im Allgemeinen den Nachteil auf, dass ein hoher konstruktiver Aufwand erforderlich ist, um durch Verklemmen der Filtertaschen mit der Rahmenkonstruktion eine dichte Verbindung zwischen diesen Elementen zu gewährleisten. Alternativ kann die Filtertasche in einem zusätzlichen Herstellungsschritt mit dem Rahmen verklebt oder an diesen angeschäumt werden. Um ein Kollabieren der Filtertaschen bei geringen Volumenströmen zu verhindern, werden Lösungen vorgeschlagen, die ebenfalls zusätzliche Herstellungsschritte erfordern. Des Weiteren besitzen die im Stand der Technik offenbarten Taschenfilterelemente den Nachteil, dass zum Abdichten der Verbindung zwischen dem Rahmen des Taschenfilterelements und dem Filtergehäuse, in welches das Taschenfilterelement eingebaut wird, ein zusätzliches Dichtungselement benötigt wird, um einen dichten Einbau und somit eine effiziente Filtration zu gewährleisten.

### Aufgabe

Der Erfindung liegt die allgemeine Aufgabe zugrunde, Filterelemente bereitzustellen, welche die zuvor beschriebenen Nachteile des Standes der Technik überwinden. Insbesondere sollen Filterelemente umfassend eine Filtertasche und einen Rahmen bereitgestellt werden, die eine hohe Dichtigkeit und Stabilität aufweisen. Weiterhin sollten die Filterelemente eine dichte Verbindung zwischen dem Rahmen des Filterelements und einer Vorrichtung, insbesondere einem Filtergehäuse, ermöglichen. Hierbei sollte die Montage möglichst einfach und ohne zusätzliches Material durchführbar sein.

Insbesondere sollen Filterelemente zur Verfügung gestellt werden, bei denen ein Kollabieren der Filtertasche bei geringen Volumenströmen vermieden wird.

Die Filterelemente sollten dabei durch ein einfaches und effizientes Herstellungsverfahren erhältlich sein, welches möglichst wenig Arbeitsschritte sowie möglichst wenig verschiedene Materialen benötigt.

### Offenbarung der Erfindung

Überraschenderweise wird die der Erfindung zugrundeliegende Aufgabe durch die Filterelemente, Verfahren, Verwendungen und Vorrichtungen gemäß den Patentansprüchen gelöst.

Gegenstand der Erfindung ist ein Filterelement, umfassend einen Rahmen und eine Filtertasche, wobei der Rahmen einen umlaufenden Elastomerkörper aufweist, in den ein Verstärkungselement eingebettet ist, wobei der Rahmen mit der Öffnung der Filtertasche verbunden ist, wobei die Verbindung stoffschlüssig durch den Elastomerkörper erfolgt. Das Filterelement im Sinne der vorliegenden Erfindung ermöglicht die Abtrennung von Stoffen aus Fluiden, insbesondere von Partikeln oder Flüssigkeiten, aus Gasen.

Ein Rahmen im Sinne der vorliegenden Erfindung ist eine Einfassung, die eine Öffnung umgibt. Die Öffnung des Rahmens entspricht der Öffnung der Filtertasche, die an dem Rahmen befestigt ist und durch diesen offengehalten und stabilisiert wird. Während der Filtration strömt das zu filternde Fluid durch die vom Rahmen gebildete Öffnung in die oder aus der Filtertasche.

Filtertaschen im Sinne der Erfindung sind einseitig geöffnete Elemente aus einem porösen Filtermaterial. Das Filtermaterial weist an einem Ende eine Öffnung auf, durch die das zu filternde Fluid strömt, und ein gegenüberliegendes Ende, an dem die Filtertasche keine Öffnung aufweist, also geschlossen ist. Die Filtertaschen weisen dabei keine weiteren Öffnungen des Filtermaterials auf. Dabei kann das Fluid durch die Öffnung in den Filter strömen und am geschlossenen Ende durch das Filtermaterial austreten und gefiltert werden. Alternativ kann das Fluid an dem geschlossenen Ende in dem Filter eindringen, und dabei gefiltert werden, und zur Öffnung hin strömen (Reverse-Betrieb). Bevorzugt tritt das Fluid durch die Öffnung ein und strömt an dem geschlossenen Ende aus der Filtertasche heraus.

Ein umlaufender Elastomerkörper im Sinne der vorliegenden Erfindung ist ein Formkörper, der ein elastisches Polymer enthält oder aus diesem besteht, und sich über den gesamten Umfang des Rahmens erstreckt. Somit korrespondiert die Form des Elastomerkörpers mit der Form des Rahmens und weist in der Mitte eine Öffnung auf, durch welche bei der Filtration das zu filternde oder gefilterte Fluid strömt.

Ein Verstärkungselement im Sinne der vorliegenden Erfindung ist ein Element, welches eine Stabilisierung und/oder eine Versteifung des Rahmens in der Ebene der Öffnung des Filterelements bewirkt. Der äußere Umfang des Verstärkungselements korrespondiert mit der Form des Rahmens. Bevorzugt umläuft das Verstärkungselement, wie auch der Rahmen, die Öffnung der Filtertasche. Das Verstärkungselement kann dabei vollständig oder teilweise in den Elastomerkörper eingebettet sein. Dabei bedeutet "einbetten", dass der Elastomerkörper das Verstärkungselement zumindest teilweise umschließt, und somit nicht nur daran anliegt.

Stoffschlüssige Verbindungen im Sinne der vorliegenden Erfindung sind irreversible Verbindungen zwischen verschiedenen Elementen, wobei diese durch atomare und/oder molekulare Kräfte zusammengehalten werden. Stoffschlüssige Verbindungen können nur durch Zerstörung des durch die Verbindung entstandenen Gegenstandes gelöst werden.

Die Filterelemente vereinen mehrere signifikante Vorteile. Die stoffschlüssige Verbindung zwischen dem Rahmen und der Filtertasche durch den Elastomerkörper ermöglicht eine Verbindung dieser Elemente mit optimaler Dichtigkeit. Des Weiteren besitzt die Verbindung eine besonders hohe Stabilität und verhindert somit das Lösen der Filtertasche vom Rahmen bei hohen Anströmgeschwindigkeiten des zu filtrierenden Fluids. Vorteilhafterweise wird weiterhin kein zusätzliches Material zum Verbinden von Rahmen und Filtertasche, wie beispielsweise Klebstoffe oder Klemmen, benötigt. Daher lassen sich die offenbarten Filterelemente vergleichsweise einfach und kostengünstig herstellen.

Die Filterelemente weisen weiterhin den Vorteil auf, dass die elastischen Eigenschaften des Rahmens eine Verbindung zwischen dem Filterelement und einem Gegenstück, wie beispielsweise einem Filtergehäuse, mit hoher Dichtigkeit ermöglichen. Bei einem Anpressen der erfindungsgemäßen Filterelemente an das Filtergehäuse werden durch die elastische Anpassung des Rahmens der Filterelemente an ihr Gegenstück Spalten und andere Undichtigkeiten vermieden. Im Gegensatz zu den Filterelementen des Standes der Technik wird hierzu kein zusätzliches elastisches Dichtungselement zwischen dem Filterelement und dem Filtergehäuse benötigt.

Erfindungsgemäß weist der Rahmen des Filterelements mindestens ein, bevorzugt mehrere, Abstandselemente auf, welche in die Filtertasche hineinragen. Diese Abstandselemente sind so ausgestaltet, dass sie eine mögliche Berührung der gegenüberliegenden Wände der Filtertasche verhindern. Somit sind die Abstandselemente ebenfalls so ausgestaltet, dass diese ein Kollabieren der Filtertasche bei geringem Fluidstrom verhindert. Beim Kollabieren der Filtertasche kommt es zu einer teilweisen Berührung, gegebenenfalls zu einer Verklebung, der gegenüberliegenden Wände der Filtertasche, wodurch die betroffene Filterfläche nicht mehr effizient zur Filterleistung der Filtertasche beitragen kann. Daher nimmt die Effizient der Filtration ab.

Durch das Verhindern des Kollabierens der Filtertasche bei geringen Volumenströmen kann vorteilhafterweise auch bei einem geringen Volumenstrom die gesamte Fläche der Filtertasche zur Filtration genutzt werden. Somit wird unter diesen Bedingungen eine effektive Filtration gewährleistet und eine ungleichmäßige Ablage der gefilterten Stoffe im Filtermaterial verhindert. Bevorzugt wird ein Kollabieren der Filtertasche bei Volumenströmen von weniger als 300 m³/h, insbesondere weniger als 100 m³/h, und beispielsweise bei etwa 30 m³/h, stabilisiert. In einer bevorzugten Ausführungsform wird ein Kollabieren der Filtertasche auch verhindert, wenn das zu filtrierende Fluid das Filterelement aus Richtung des geschlossenen Endes der Filtertasche zum offenen Ende der Filtertasche hin durchströmt. Ein solcher Betrieb wird allgemein als "Reverse-Betrieb" bezeichnet.

Erfindungsgemäß sind das Abstandselement und das Verstärkungselement einstückig ausgebildet. Dies bietet insbesondere den Vorteil, dass diese Teile in einem Herstellungsschritt hergestellt werden können und das Zusammensetzen der Teile als zusätzlicher Herstellungsschritt entfällt. Die genannte Verbindungsart bietet auch den Vorteil einer besonders stabilen Verbindung.

In einer bevorzugten Ausführungsform ist der Elastomerkörper an die Filtertasche angegossen. Bevorzugt wird beim Angießen gleichzeitig der Rahmen aus dem Verstärkungselement und dem Elastomerkörper hergestellt. Dabei erfolgt das Angießen an die Filtertasche so, dass das Verstärkungselement dabei gleichzeitig in den Elastomerkörper eingebettet wird. Durch das Angießen des Elastomerkörpers an die Filtertasche kann in einem einzigen einfachen Verfahrensschritt eine stoffschlüssige Verbindung mit den oben genannten Vorteilen gebildet werden.

Der Elastomerkörper der Filterelemente enthält mindestens ein Elastomer oder besteht daraus. Das Elastomer kann beispielsweise aus der Gruppe umfassend Polyurethane, Polyester, Polyamide, Polyolefine, Polyacrylate, Polystyrole, natürliche und synthetische Kautschuke, oder Gemischen davon, ausgewählt werden. Das Elastomer kann ein Homopolymer oder ein Copolymer sein. Das Copolymer kann beispielsweise aus der Gruppe umfassend Acrylnitril-Butadien-Acrylat-Copolymere, Acrylnitril-chloriertes Polyethylen-Styrol-Copolymere, Acrylnitril-Methylmethacrylat-Copolymere, Ethylen-Ethylacrylat-Copolymere, Styrol-Butadien-Styrol-Copolymere, Vinylchlorid-Ethylen-Copolymere und Vinylchlorid-Ethylen-Methacrylat-Copolymere ausgewählt werden. Der synthetische Kautschuk kann beispielsweise aus der Gruppe umfassend Butadien-Kautschuk, Butyl-Kautschuk, Chloropren-Kautschuk, Ethylen-Propylen-Dien-Kautschuk, Fluorkautschuk, Isopren-Kautschuk, Naturkautschuk, Polyurethane, Silicon-Kautschuk und Styrol-Butadien-Kautschuk ausgewählt werden. In alternativen Ausführungsformen kann der Elastomerkörper eine Mischung aus mehreren verschiedenen Elastomeren und/oder deren Copolymere enthalten. Das Elastomer kann auch ein gegossenes oder geschäumtes Elastomer sein.

Bevorzugt ist das Elastomer ein Polyurethan und enthält somit keine weitere Polymerkomponente. In einer bevorzugten Ausführungsform enthält der Elastomerkörper mindestens ein Polyurethan als Elastomer. Das Polyurethan ist in einer bevorzugten Ausführungsform ein Zweikomponenten-Polyurethan, welches durch Umsetzung mindestens eines organischen Diisocyanats mit einem langkettigen Polyol gebildet wird.

Als organische Diisocyanate zur Herstellung der Polyurethane kommen beispielsweise aliphatische, cycloaliphatische, araliphatische, heterocyclische und aromatische Diisocyanate in Betracht. Beispielsweise können aliphatische Diisocyanate wie Hexamethylendiisocyanat, cycloaliphatische Diisocyanate wie Isophorondiisocyanat, 1,4-Cyclohexandiisocyanat, 1-Methyl-2,4- und -2,6-cyclohexan-diisocyanat, 4,4'-, 2,4'- und 2,2'-Dicyclohexylmethandiisocyanat, aromatische Diisocyanate wie 2,4-To-luylendiisocyanat oder 3,3'-Dimethyl-4,4'-biphenyldiisocyanat oder 1,4-Phenylendiisocyanat, 2,4- und 2,6-Toluylendiisocyanat, Diphenylmethandiisocyanate wie 4,4'-Diphenylmethandiisocyanat, 2,4'-Diphenylmethandiisocyanat und 2,2'-Diphenylmethandiisocyanat, 2,4'-Diphenylmethandiisocyanat und 4,4'-Diphenylmethandiisocyanat, urethanmodifizierte, flüssige 4,4'-Diphenylmethandiisocyanate und/oder 2,4'-Diphenylmethandiisocyanate, 4,4'-Diisocyanatodiphenyl-ethan-(1,2) und 1,5-Naphthylendiisocyanat oder ein Gemisch der genannten Verbindungen verwendet werden.

Das Polyol kann aus mindestens einem Polyol der Gruppe umfassend Polycarbonate, Polyester, Polyether oder einem Gemisch der genannten Verbindungen ausgewählt werden. Das Polyol kann ein Molekulargewicht von 500 g/mol bis 5.000 g/mol aufweisen. Bevorzugt werden Polyole mit einem Molekulargewicht von 1.000 g/mol bis 3.000 g/mol, und besonders bevorzugt von 1.500 g/mol bis 2.500 g/mol, eingesetzt.

Die Diisocyanate bilden, gegebenenfalls zusammen mit kurzkettigen Diolen oder Diaminen als Kettenverlängerer, die Hartsegmente des Elastomers. Die langkettigen Polyole bilden die Weichsegmente des Elastomers. Die elastischen Eigenschaften der Polyurethane werden durch das Verhältnis von Hart- und Weichsegmenten bestimmt, wobei ein höherer Anteil an Weichsegmenten die Elastizität erhöht. Des Weiteren erhöht sich die Elastizität der Weichsegmente mit steigender Länge der Weichsegmente.

In einer weiterhin bevorzugten Ausführungsform kann es sich bei dem Polyurethan um ein geschäumtes oder gegossenes Polyurethan handeln.

Die genannten Polyurethane weisen den Vorteil auf, dass sie gute elastische Eigenschaften, gute Adhäsionseigenschaften zur stoffschlüssigen Verbindung der Elemente des Filterelements sowie eine gute Formbarkeit aufweisen.

Bei dem verwendeten Elastomer kann es sich bevorzugt um ein Weichpolymer, bevorzugt um ein Weichpolyurethan, handeln. Die Weichheit von Polymeren kann durch ihre Shore-Härte charakterisiert werden. Das im Elastomerkörper enthaltene Elastomer kann eine Shore-Härte A von 10 bis 50, bevorzugt 20 bis 40, insbesondere bevorzugt 25 bis 35 aufweisen. Das Elastomer kann eine Shore-Härte A von 15 bis 35, 20 bis 40 und 25 bis 50 aufweisen. Das Elastomer kann eine Shore-Härte A von weniger als 60, weniger als 55, weniger als 50, weniger als 45, weniger als 40, weniger als 35 oder weniger als 30 aufweisen. In einer speziell bevorzugten Ausführungsform weist das Elastomer eine Shore-Härte A von 28 auf. Die Shore-Härte A kann gemäß der DIN ISO 7619-1 bestimmt werden. Elastomere der genannten Weichheit weisen den Vorteil auf, dass sie eine besonders dichte Verbindung zwischen Rahmen und Filtertasche des Filterelements und/oder zwischen dem Rahmen des Filterelements und einem Filtergehäuse ermöglichen, ohne dass zusätzliche Dichtungselemente benötigt werden.

Der Elastomerkörper kann zumindest teilweise in Form einer umlaufenden Dichtlippe ausgebildet sein, wodurch die radiale Abdichtung des Filterelements vorteilhaft verbessert wird. Des Weiteren kann der Elastomerkörper im äußeren Bereich des Rahmens eine Kompensationsnut umfassen. Die Kompensationsnut kann vorteilhafterweise Rückstellungskräfte verringern. Insbesondere die Kombination von Dichtlippe und Kompensationsnut ermöglicht eine leckfreie Montage des Filterelements mit hoher Dichtigkeit.

In den Elastomerkörper des Rahmens ist mindestens ein Verstärkungselement so eingebettet, dass ein Verbiegen des Rahmens unter üblichen Betriebsbedingungen verhindert wird. Dies hat den Vorteil, dass der Rahmen stabilisiert wird, ohne die für die Verwendung des Filterelements vorteilhaften elastischen Eigenschaften des Rahmens einzuschränken. Die Stabilisierung des Rahmens verhindert ein Verbiegen des Rahmens, und damit potentielle Undichtigkeiten zwischen dem Rahmen des Filterelements und einem Filtergehäuse.

Bevorzugt ist das Verstärkungselement über den gesamten Umfang des Rahmens in den Elastomerkörper eingebettet. Somit entspricht die äußere Form des Verstärkungselements der Rahmenform. Das Verstärkungselement kann teilweise oder vollständig von dem Elastomerkörper umgeben sein. In einer bevorzugten Ausführungsform ist das Verstärkungselement nur teilweise von dem Elastomerkörper umgeben. In einer besonders bevorzugten Ausführungsform ist das Verstärkungselement in Einbaurichtung, beispielsweise in der Anströmrichtung des Fluids, von dem Elastomerkörper umgeben. In der Einbaurichtung des Filterelements liegt dieses im Gebrauchszustand an einem Teil einer Vorrichtung, wie etwa einem Filtergehäuse, an.

Das Verstärkungselement kann mindestens ein Metall und/oder mindestens einen Thermoplasten und/oder mindestens einen Duroplasten enthalten oder daraus bestehen. Dabei ist das Material so ausgewählt, dass das Verstärkungselement eine ausreichende Härte und Festigkeit aufweist, um die Struktur des Rahmens bei üblichen Betriebsbedingungen zu gewährleisten. Das Verstärkungselement ist dabei in einer bevorzugten Ausführungsform starr, also nicht elastisch. Der Thermoplast kann beispielsweise aus der Gruppe umfassend Polystyrene, Polyamide, Polybutylenterephthalate, Polybutylenterephthalate, Polycarbonate, Polyester, Polyetherimide, Polyetherketone, Polyethylene, Polyethersulfone, Polyethylenterephthalate, Polyimide, Polyvinylchloriden, oder der Gruppe der Copolymere umfassend Styrol-Acrylnitril-Copolymere, Acrylester-Styrol-Acrylnitril-Copolymere, Acrylnitril-Butadien-Styrol-Copolymere, Cyclo-Olefin-Copolymere, Ethylen-Propylen-Copolymere, Fluorethylenpropylene ausgewählt werden. Bevorzugte Thermoplasten sind Acrylnitril-Butadien-Styrol-Copolymere. Der Duroplast kann beispielsweise aus der Gruppe umfassend Epoxidharze, Harnstoff-Formaldehydharze, Melamin-Formaldehydharze, Melamin-Phenol-Formaldehyde, Phenol-Formaldehydharz oder Polyester ausgewählt werden.
In einer bevorzugten Ausführungsform werden als Thermoplasten thermoplastische Elastomere (TPE) eingesetzt. Diese vereinen die Eigenschaften von Gummi mit denen von Thermoplasten. TPE ist weich wie Gummi, lässt sich aber durch Wärmezufuhr plastisch verformen, was eine Verarbeitung durch Spritzgießen, wie Mehrkomponentenspritzgießen, insbesondere Zweikomponentenspritzgießen, und Extrusion ermöglicht. Thermoplastische Elastomere (TPE) enthalten zwei Phasen, von denen die harte Phase für das Aufschmelzen und die weiche Phase für den elastomerartigen Charakter verantwortlich ist. TPE sind im allgemeinen nicht chemisch vernetzt, sondern weisen in Teilbereichen physikalische Vernetzungspunkte (Nebenvalenzkräfte oder Kristallite) auf, die sich bei Wärme auflösen, ohne dass sich die Makromoleküle zersetzen. Thermoplastische Elastomere sind besonders bevorzugt, wenn das Filterelement durch Spritzgießen hergestellt wird.

Die Abstandselemente sind im Bereich der Filtertasche bevorzugt nicht direkt, insbesondere nicht durch stoffschlüssige Verbindungen, wie Verschweißen oder Verkleben, mit dem Filtermaterial verbunden.

Die Abstandselemente können bevorzugt die Form von länglichen, rippenförmigen Stegen oder von Stäben aufweisen. Die Abstandselemente ragen vom Rahmen aus in die Filtertasche hinein und erstrecken sich vom offenen Ende der Filtertasche hin in Richtung des hinteren Endes der Filtertasche. Dabei können die Abstandselemente zwei Seiten oder Ecken, insbesondere gegenüberliegende Seiten und nebeneinanderliegende Ecken, des Rahmens miteinander verbinden. Somit tragen die Abstandselemente auf vorteilhafte Weise auch zur Stabilisierung des Rahmens bei.

Die Abstandselemente können einen geraden oder einen zumindest teilweise gebogenen Querschnitt aufweisen. In einer spezifischen Ausführungsform kann ein Abstandselement einen kreisförmigen oder einen elliptischen Querschnitt aufweisen, wobei das Abstandselement in dieser Ausführungsform an gegenüberliegenden Stellen des kreisförmigen Querschnitts mit dem Rahmen verbunden ist.

In einer bevorzugten Ausführungsform verjüngen sich die Abstandselemente in Richtung des hinteren Endes der Filtertasche. In einer weiterhin bevorzugten Ausführungsform sind die Abstandselemente in Richtung des hinteren Endes der Filtertasche abgerundet gestaltet. Dadurch kann eine Beschädigung der Filtertaschen an Ecken der Abstandselemente verhindert werden. In einer bevorzugten Ausführungsform verjüngen sich die Abstandselemente zumindest in Teilbereichen in Richtung des hinteren Endes der Filtertasche. Zur Erleichterung der Montage kann das Verstärkungselement bevorzugt gebogene rippenförmige Stege aufweisen, die zwei nebeneinanderliegende Ecken des Verstärkungselements verbinden. Vorzugsweise sind diese rippenförmigen Stege in Richtung des hinteren Endes der Filtertasche abgerundet und schließen bündig mit den Ecken des Verstärkungselements ab. Durch diese Gestaltung der Abstandselemente wird das Überstülpen der Filtertasche über die Abstandselemente und das Verstärkungselement bei der Montage der Filterelemente erleichtert, so dass für diesen Schritt kein Werkzeug benötigt wird.

Im Falle einer formschlüssigen Verbindung zwischen Rahmen und Abstandselementen können die Abstandselemente in einer alternativen Ausführungsform auch erst direkt vor der Verwendung des Filterelements mit dem Rahmen verbunden werden. Dadurch wird das Verpackungs- und Transportvolumen des Filterelements auf vorteilhafte Weise verringert. Zur formschlüssigen Verbindung von Rahmen und Abstandselement können diese Teile korrespondierende Elemente aufweisen. Beispielsweise kann der Rahmen eine Nut und das Abstandselement eine entsprechende Feder aufweisen. Alternativ können Rahmen und Abstandselemente andere Elemente aufweisen, welche diese verrastbar oder anderweitig formschlüssig verbindbar machen.

In einer weiteren bevorzugten Ausführungsform können die Abstandselemente beweglich sein. Bevorzugt sind sie dabei klappbar, also einklappbar oder ausklappbar. Sie weisen dazu eine Klappeinrichtung auf, beispielsweise ein Gelenk oder Scharnier, insbesondere ein Filmscharnier. Sie können dabei über die Klappeinrichtung mit dem Rahmen verbunden sein. Die Abstandselemente können dadurch eingeklappt werden, bevorzugt in Richtung des Rahmens, insbesondere um Platz einzusparen. Dies ist vorteilhaft, wenn das Filterelement nicht bestimmungsgemäß verwendet wird, wie bei der Lagerung, beim Transport und/oder beim Verpacken. Abstandselemente können so für die Verpackung und den Transport eingeklappt und vor der Verwendung des Filterelements ausgeklappt werden.

In einer besonders bevorzugten Ausführungsform umfasst die Filtertasche mindestens einen Vliesstoff. Der Vliesstoff besteht bevorzugt aus Fasern aus künstlichen Polymeren. In einer bevorzugten Ausführungsform sind die Fasern solche aus organischen Polymeren. In einer weiteren bevorzugten Ausführungsform enthält der Vliesstoff anorganische Fasern oder besteht daraus, beispielsweise Glasfasern. Der Vliesstoff ist das Filtermaterial und bewirkt die Filterung des Fluids. Die Filtertasche des Filterelements kann ein progressives Filtermaterial umfassen. Dabei nimmt die Dichte des Filtermaterials über den Querschnitt des Filtermaterials zu. Das Filtermaterial kann auch aus mehreren Materialschichten bestehen.

Vorzugsweise kann das Filtermaterial der Filtertasche ein Koaleszenzfilter sein, insbesondere ein Filtermaterial, das zur Abscheidung von Wasser aus Gasen geeignet ist. Solche Filter eigenen sich insbesondere zur Abscheidung von Wasser bei der Filtration von Luft, die einem Motor zugeführt wird. Das Filtermaterial kann auch zur Abscheidung von Partikeln und Stäuben, insbesondere von Partikeln gesundheitsschädlicher Stoffe, wie beispielsweise Düngemittel, Herbizide oder Insektizide, geeignet sein.

In einer bevorzugten Ausführungsform umfasst das Filterelement nur eine einzige Filtertasche. Das Filterelement kann mehrere Filtertaschen umfassen, beispielsweise 2, 3, 4 oder mehr Filtertaschen. Bevorzugt sind dabei auch Ausgestaltungen mit 2 bis 20, insbesondere mit 5 bis 15 oder 6 bis 12 Filtertaschen.

Die Erfindung wird im Folgenden anhand von Zeichnungen näher erläutert.
Fig. 1 zeigt ein erfindungsgemäßes Filterelement mit Blick auf den Rahmen und die Filtertasche.
Fig. 2 zeigt das Filterelement in Durchströmungsrichtung.
Fig. 3A zeigt einen Schnitt durch ein Filterelement entlang der Linie A-A aus Fig. 2, mit Blick auf die Abstandselemente.
Fig. 3B zeigt den eingekreisten Teilbereich der Fig 3A im Detail.
Fig. 4 zeigt den Querschnitt eines Verstärkungselements in Durchströmungsrichtung mit einem kreisförmigen Abstandselement.

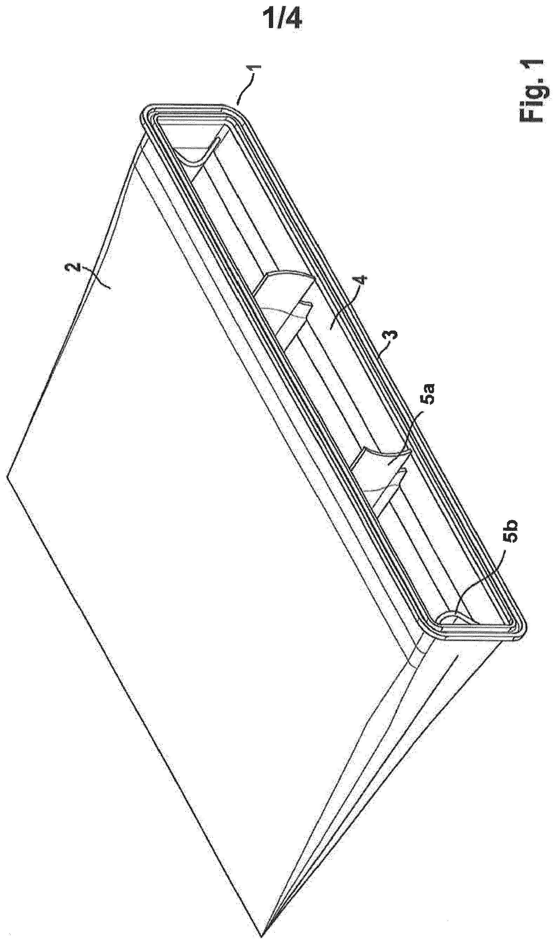

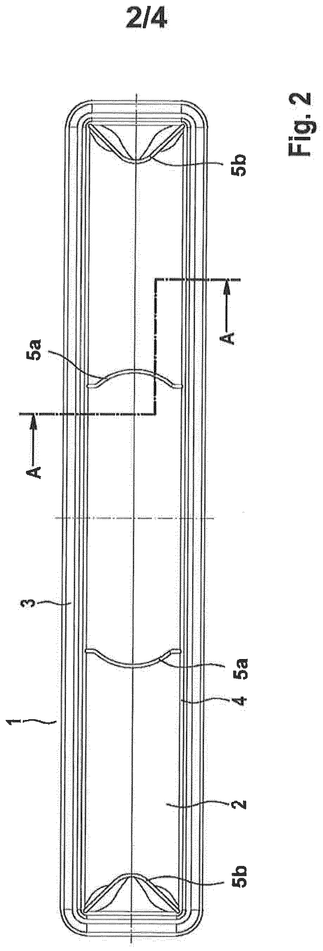

Wie in Fig. 1 und Fig. 2 dargestellt ist, umfasst das offenbarte Filterelement einen Rahmen 1 und eine Filtertasche 2, wobei der Rahmen 1 einen umlaufenden Elastomerkörper 3 aufweist, in den ein Verstärkungselement 4 eingebettet ist. Der Rahmen 1 ist mit der Öffnung der Filtertasche 2 verbunden und umfasst die Öffnung des Filterelements. Das Verstärkungselement 4 wird außenseitig teilweise von der Filtertasche 2 umfasst. Die Filtertasche 2 verjüngt sich vom offenen Ende zum geschlossenen Ende hin. Die Verbindung zwischen Filtertasche 2 und Rahmen 1 erfolgt stoffschlüssig durch den Elastomerkörper 3. Die Verbindung zwischen dem Elastomerkörper 3 und dem Verstärkungselement 4 erfolgt ebenfalls stoffschlüssig. Hierbei umschließt der Elastomerkörper 3 an der Außenseite des Rahmens 1 sowohl das Verstärkungselement 4 als auch die Filtertasche 2.

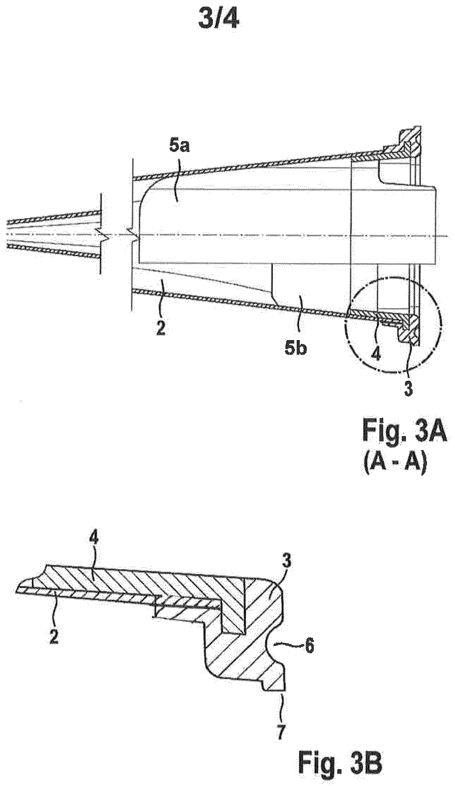

Das Filterelement weist Abstandselemente 5a, 5b auf, die in die Filtertasche 1 hineinragen. In Fig. 1 und Fig. 2 sind die Abstandselemente 5a, 5b als rippenförmige Stege ausgestaltet. Diese sind innerhalb des Rahmens zum Teil mittig angeordnet 5a und verbinden die gegenüberliegenden Seiten des Rahmens miteinander. Die Stege in der gezeigten Ausführungsform sind teilweise gebogen ausgeformt und einstückig mit dem Verstärkungselement 4 ausgeführt. Wie in Fig. 3A gezeigt sind die Abstandselemente 5a in Richtung des hinteren Endes der Filtertasche 1 abgerundet und verjüngen sich in der Breite. Die Abstandselemente 5a, 5b sind so gestaltet, dass sie ein Kollabieren der Filtertasche mit geringem Volumenstrom verhindern.

Weiterhin weist das in Fig. 1 und Fig. 2 dargestellte Filterelement seitlich angeordnete Abstandselemente 5b auf, welche jeweils zwei nebeneinanderliegende Ecken des Rahmens miteinander verbinden. Die seitlich angeordneten Abstandselemente sind ebenfalls in Richtung des hinteren Endes der Filtertasche abgerundet. Die Abstandselemente 5a, 5b sind innerhalb des Verstärkungselements 4 so angeordnet, dass sie ein Überstreifen der Filtertasche 1 über das Verstärkungselement 4 während der Montage des Filterelements erleichtern.

Die beiden gegenüberliegenden längeren Seiten des Rahmens 1 können beispielsweise eine Länge von 10 cm bis 100 cm, 20 cm bis 80 cm oder 30 cm bis 60 cm aufweisen. Die beiden gegenüberliegenden kurzen Seiten des Rahmens können beispielsweise eine Länge von 3 cm bis 30 cm, 4 cm bis 15 cm oder 6 cm bis 10 cm aufweisen.

Fig. 3A ist ein Schnitt durch das Filterelement entlang der Linie A-A aus Fig. 2, mit Blick auf die Abstandselemente 5a, 5b gezeigt. Die Abstandselemente 5a, 5b verjüngen sich in Richtung des hinteren Endes der Filtertasche und sind einstückig mit dem Verstärkungselement 4 ausgebildet.

In Fig. 3B ist der in Fig. 3A eingekreiste Teil des Schnitts durch den Rahmen des Filterelements im Detail zu sehen. Insbesondere wird in Fig. 3B ersichtlich, dass die dargestellte Ausführungsform des Filterelements im äußeren Bereich des Rahmens eine umlaufende Kompensationsnut 6 aufweist, die Rückstellkräfte bei der Montage des Filterelements verringert. Weiterhin weist das Filterelement im äußeren Bereich des Rahmens eine umlaufende Dichtlippe 7 auf. Insbesondere die Kombination aus Kompensationsnut 6 und Dichtlippe 7 ermöglichen eine leckfreie Montage des Filterelements.

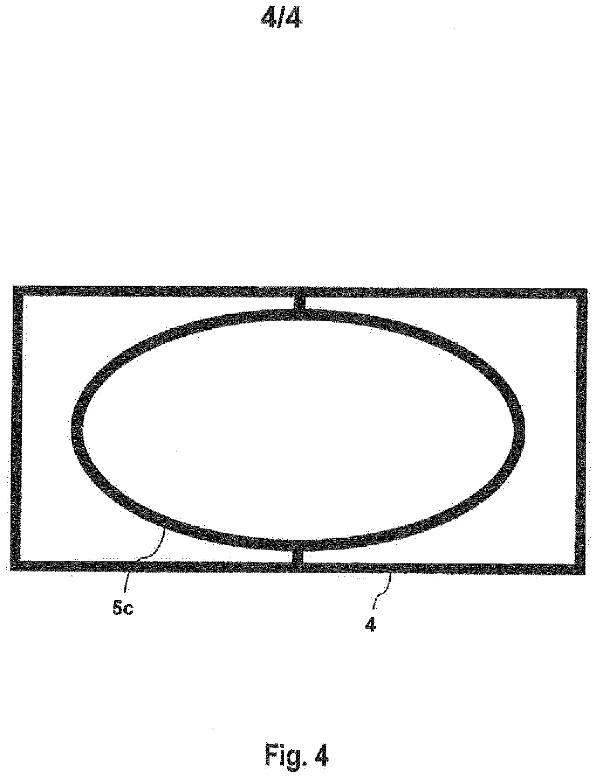

Das Abstandselement kann aus einem gestanzten Metallteil hergestellt werden, wie in Fig. 4 beispielhaft dargestellt. Dabei ist in einer Ebene ein Abstandelement 5c mit einem Rahmen 4 verbunden. Das Abstandselement 5c kann aus der Ebene des Rahmens heraus in eine gewünschte Richtung gebogen werden.

Ein Verfahren zur Herstellung eines Filterelements, umfasst die Schritte:
a) Einbringen eines Teils der Filtertasche, welcher deren Öffnung umfasst, sowie Einbringen des Verstärkungselements oder einer Vorläuferverbindung für das Verstärkungselement, in eine Gussform,
   gegebenenfalls gefolgt von Härten und/oder Polymerisieren der Vorläuferverbindung zu dem Verstärkungselement,
b) Einbringen mindestens einer Elastomervorläuferverbindung in die Gussform, und
c) Härten und/oder Polymerisieren der Elastomervorläuferverbindung zu dem Elastomerkörper, der dadurch mit dem Verstärkungselement den Rahmen bildet, der mit der Öffnung der Filtertasche stoffschlüssig durch den Elastomerkörper verbunden ist.

In Schritt a) kann ein vorgefertigtes Verstärkungselement eingesetzt werden. Alternativ kann Schritt a) so erfolgen, dass das Verstärkungselement, also der entsprechende Formkörper, erst in der Gussform aus einer Vorläuferverbindung hergestellt wird. Dies erfolgt insbesondere durch Gießen, insbesondere Spritzgießen, und anschließendes Härten und/oder Polymerisieren. Bevorzugt entsteht dabei bereits eine Verbindung zwischen dem Verstärkungselement und der Filtertasche.

Die Schritte a) und b) können in beliebiger Reihenfolge ausgeführt werden. Die Form der Gussform entspricht dabei im Wesentlichen der äußeren Form des Filterelements oder eines Teils davon, insbesondere des Elastomerkörpers und gegebenenfalls auch des Verstärkungselements. In Schritt a) wird der Teil der Filtertasche, welcher die Öffnung umfasst, in die Gussform gegeben. Der Teil der Filtertasche, der in dem Produkt zur Filtration dienen soll, wird nicht in die Gussform eingeführt, oder zumindest nicht mit Elastomer ausgestattet. Der Teil der Filtertasche, der die Öffnung umfasst, wird mit dem Verstärkungselement verbunden. Dabei kann die Filtertasche so über das vorgefertigte Verstärkungselement gestülpt werden, dass sie das Verstärkungselement am äußeren Rand umgibt. Die Abstandselemente können das Überstülpen der Filtertasche über das vorgefertigte Verstärkungselement und das Fixieren erleichtern, so dass dieser Schritt auch werkzeuglos erfolgen kann.

Die in Schritt b) in die Gussform eingebrachten Elastomervorläuferverbindung liegt üblicherweise in flüssigem Zustand vor. Sie kann in die Form gegossen oder gespritzt werden. Hierbei kann das Einbringen auch unter gleichzeitigem Aufschäumen erfolgen. Die Vorläuferverbindung wird durch physikalische oder chemische Reaktion zu einem festen Elastomerkörper umgewandelt.

Die Elastomervorläuferverbindung ist bevorzugt ausgewählt aus Verbindungen, die durch Reaktion miteinander zu einem Elastomer polymerisieren, wie beispielsweise bei der Reaktion von Diisocyanaten und Polyolen zu Polyurethanen. Zur Polymerisation der Elastomervorläuferverbindung zu einem Elastomer und/oder zum Härten des Elastomers in Schritt c) können geeignete Polymerisationsinitiatoren oder Vernetzer zugeführt werden. Des Weiteren kann in Schritt c) eine geeignete Temperatur zur Polymerisation oder Härtung eingestellt werden und/oder das Elastomer mit Strahlung einer zur Härtung geeigneten Wellenlänge bestrahlt werden.

Bei Härten und/oder Polymerisieren der Elastomervorläuferverbindung zu dem Elastomerkörper wird das erfindungsgemäße Filterelement erhalten. Der sich bildende Elastomerkörper in der Gussform umschließt zumindest teilweise das Verstärkungselement, so dass dadurch der Rahmen entsteht. Dieser wird gleichzeitig durch den Elastomerkörper stoffschlüssig mit der Filtertasche im Bereich der Öffnung verbunden.

Das Verfahren besitzt den Vorteil, dass Elastomerkörper, Verstärkungselemente und Filtertasche in einem einfachen Verfahren zu einem Filterelement mit den bereits zuvor beschriebenen Vorteilen verbunden werden können. Somit können die erfindungsgemäßen Filterelemente im Vergleich zu anderen Filterelementen kostengünstig hergestellt werden.

In einer bevorzugten Ausführungsform wird das Filterelement in einem Spritzgießverfahren hergestellt, insbesondere in einem Zweischrittspritzgießverfahren. Bevorzugt erfolgen dabei das Einbringen der Vorläuferverbindung des Verstärkungselements in Schritt a) und das Einbringen der Elastomervorläuferverbindung in Schritt b) jeweils durch Spritzgießen. Dabei wird zunächst der Teil der Filtertasche, welcher deren Öffnung umfasst, in die Gussform eingebracht. Danach wird durch Spritzgießen die Vorläuferverbindung des Verstärkungselements eingebracht. Dabei wird die Vorläuferverbindung in die Gussform eingespritzt, gefolgt von Härten und/oder Polymerisieren zu dem Verstärkungselement. Bevorzugt entsteht dadurch in Schritt a) bereits eine Verbindung zwischen der Filtertasche und dem Verstärkungselement. Das Einbringen der Elastomervorläuferverbindung in Schritt b) erfolgt dabei ebenfalls durch Spritzgießen. Insgesamt kann so das Filterelement nach Vorlage der Filtertasche in einem Zweischrittspritzgießverfahren hergestellt werden. Diese Ausführungsform ist vorteilhaft, weil das Filterelement insgesamt auf relativ einfache Weise in wenigen Verfahrensschritten herstellbar ist.

Gegenstand der Erfindung sind ebenfalls verschiedene Verwendungen der im Vorhergehenden offenbarten Filterelemente. Die Filterelemente können zur Filtration von Fluiden, insbesondere von Gasen, und dabei insbesondere vom Luft verwendet werden. Die Filterelemente können dabei zur Abscheidung von Flüssigkeiten, insbesondere von Wasser, Partikeln und/oder gesundheitsschädlichen Stoffen, insbesondere aus Luft oder anderen Gasen, verwendet werden. In diesem Zusammenhang können die Filterelemente beispielsweise zur Filtration der Zuluft von Kabinen von land- und forstwirtschaftlichen Traktoren und selbstfahrenden Pflanzenschutzgeräten verwendet werden. Aufgrund ihrer hohen Dichtigkeit bei gleichzeitig einfachem Aufbau können die Filterelemente bei der Filtration eine Effizienz von mindestens 90%, bevorzugt mindestens 95%, besonders bevorzugt mindestens 99% erreichen. Somit können sie den Anforderungen an einen Staubfilter der Kategorie 2 der DIN-Norm EN 15695-1 und EN 15695-2 entsprechen. Die Filterelemente können weiterhin zur Filtration von Luft, die durch Anlagen der Filtertechnik, wie Klimaanlagen, Heizungen, Kühlungen oder Lüftungen, sowie durch Staubsauger, Luftreiniger oder andere Reinigungsvorrichtungen geleitet wird, verwendet werden. Ebenso können die Filterelemente zur Filtration der Zuluft von Motoren verwendet werden. Die Filterelemente können auch zu den genannten Filtrationen/Abscheidungen im "Reverse-Betrieb" verwendet werden. Die Filterelemente können auch in einem Verfahren zur Filtration von Fluiden, insbesondere von Luft, oder einem Verfahren zur Abscheidung von Flüssigkeiten, insbesondere von Wasser, Partikeln und/oder gesundheitsschädlichen Stoffen aus Luft oder anderen Gasen verwendet werden.

Gegenstand der Erfindung ist auch eine Vorrichtung, umfassend ein im Vorhergehenden beschriebenes Filterelement und ein Luftleitungselement und/oder ein Filtergehäuse und/oder einen Motor. Das zu filternde Fluid kann die Vorrichtung passiv oder aktiv, wie beispielsweise in Gebläsen oder Saugvorrichtungen, durchströmen. Ein Luftleitungselement im Sinne der vorliegenden Erfindung kann jede Konstruktion darstellen, die einen Luftstrom leitet, wie Luftkanäle, Rohre, Luftansaugelemente von Motoren oder Teile von Anlagen der Klimatechnik, wie Klimaanlagen, Heizungen, Kühlungen oder Lüftungen.

Die erfindungsgemäßen Filterelemente, Verfahren und deren Herstellung und erfindungsgemäßen Verwendungen lösen die der Erfindung zugrundeliegende Aufgabe. Die Filterelemente besitzen aufgrund ihrer stoffschlüssigen Verbindung zwischen Rahmen und Filtertasche durch den Elastomerkörper eine besonders hohe Dichtigkeit zwischen Rahmen und Filtertasche. Des Weiteren besitzt die Verbindung eine besonders hohe Stabilität und verhindert somit das Lösen der Filtertasche vom Rahmen bei hohen Anströmgeschwindigkeiten des zu filtrierenden Fluids. Im Vergleich zu vorbekannten Filterelementen des Standes der Technik können die genannten vorteilhaften Eigenschaften bei Dichtigkeit und Stabilität durch einen einfachen Aufbau des erfindungsgemäßen Filterelements verwirklicht werden. Eine zusätzliche Dichtung zwischen Rahmen und Filtertasche wird nicht benötigt. Hierdurch wird die Herstellung der Filterelemente vereinfacht und Herstellungskosten verringert.

Die elastischen Eigenschaften des Rahmens ermöglichen auf vorteilhafte Weise auch eine dichte Verbindung zwischen dem Filterelement und seinem Gegenstück, wie beispielsweise einem Filtergehäuse, mit hoher Dichtigkeit. Filterelemente des Standes der Technik benötigen üblicherweise ein zusätzliches elastisches Dichtungselement zwischen dem Filterelement und dem Filtergehäuse, um hier eine dichte Verbindung zu gewährleisten. Bei den erfindungsgemäßen Filterelementen kann auch hier auf diese zusätzliche Dichtung verzichtet werden. Dies vereinfacht insbesondere die Endmontage der Filterelemente.

Die oben genannten Vorteile werden insbesondere bei der Verwendung von Polyurethanen im Elastomerkörper realisiert, da diese guten elastische Eigenschaften, gute Adhäsionseigenschaften zur stoffschlüssigen Verbindung der Elemente des Taschenfilters sowie eine gute Formbarkeit aufweisen.

Da in den erfindungsgemäßen Filterelementen ein Kollabieren der Filtertasche bei geringen Volumenströmen verhindert wird, kann auch unter diesen Betriebsbedingungen vorteilhafterweise die gesamte Fläche der Filtertasche zur Filtration genutzt werden. Hierbei wird eine effektive Filtration gewährleistet und eine ungleichmäßige Ablagerung der gefilterten Stoffe im Filtermaterial verringert. Das Verhindern des Kollabierens der Filtertasche durch die Abstandselemente ermöglicht überdies sogar eine Verwendung der Filterelemente im "Reverse-Betrieb". Durch die einstückige Gestaltung von Rahmen und Abstandselementen kann diese zusätzliche Funktonalität des Filterelements ohne zusätzliche Herstellungs- oder Montageschritte verwirklicht werden.

Die erfindungsgemäßen Filterelemente lassen sich in dem erfindungsgemäßen Verfahren mit wenigen Schritten zusammensetzen. Somit wird die Bereitstellung der Filterelemente mit den zuvor beschriebenen vorteilhaften Eigenschaften mit einem vergleichsweise kostengünstigen Herstellungsverfahren ermöglicht.

## Patentansprüche

1. Ein Filterelement, umfassend einen Rahmen (1) und eine Filtertasche (2), wobei der Rahmen (1) einen umlaufenden Elastomerkörper (3) aufweist, in den ein Verstärkungselement (4) eingebettet ist, wobei der Rahmen (1) mit der Öffnung der Filtertasche (2) verbunden ist, wobei die Verbindung stoffschlüssig durch den Elastomerkörper (3) erfolgt,
**dadurch gekennzeichnet, dass** der Rahmen (1) mindestens ein Abstandselement (5) aufweist, **welches in die Filtertasche (2) hineinragt** und welches eine Berührung der gegenüberliegenden Wände der Filtertasche (2) verhindert, wobei das Abstandselement (5) und das Verstärkungselement (4) miteinander einstückig ausgebildet sind.

2. Das Filterelement gemäß Anspruch 1, wobei der Elastomerkörper (3) an die Filtertasche (2) angegossen ist.

3. Das Filterelement gemäß mindestens einem der vorhergehenden Ansprüche, wobei der Elastomerkörper (3) mindestens ein Polyurethan enthält.

4. Das Filterelement gemäß mindestens einem der vorhergehenden Ansprüche, wobei das in dem Elastomerkörper (3) enthaltene Elastomer eine Shore-Härte A von 10 bis 50 aufweist.

5. Das Filterelement gemäß mindestens einem der vorhergehenden Ansprüche, wobei das Abstandselement (5) zwei gegenüberliegende Seiten oder zwei Ecken des Rahmens (1) verbindet, wobei das Abstandselement (5) bevorzugt klappbar ist.

6. Das Filterelement gemäß mindestens einem der vorhergehenden Ansprüche, wobei der Elastomerkörper (3) zumindest teilweise in Form einer umlaufenden Dichtlippe (7) ausgebildet ist.

7. Das Filterelement gemäß mindestens einem der vorhergehenden Ansprüche, wobei das Verstärkungselement (4) mindestens ein Metall und/oder mindestens einen Thermoplasten und/oder mindestens einen Duroplasten enthält.

8. Das Filterelement gemäß mindestens einem der vorhergehenden Ansprüche, wobei die Filtertasche (2) mindestens einen Vliesstoff umfasst.

9. Verwendung eines Filterelements gemäß mindestens einem der Ansprüche 1 bis 8 zur Abscheidung von Wasser und/oder Stäuben, Düngemitteln, Herbiziden oder Insektiziden aus Luft.

10. Verwendung eines Filterelements gemäß mindestens einem der Ansprüche 1 bis 8 zur Filtration von Luft, wobei diese das Filterelement aus Richtung des geschlossenen Endes der Filtertasche zum offenen Ende der Filtertasche hin durchströmt.

11. Vorrichtung, umfassend ein Filterelement gemäß mindestens einem der Ansprüche 1 bis 8 und ein Luftleitungselement und/oder einen Motor.

## Claims

1. Filter element, comprising a frame (1) and a filter pocket (2), where the frame (1) has, running around the periphery, an elastomer body (3) into which a reinforcement element (4) has been embedded, there being bonding between the frame (1) and the aperture of the filter pocket (2), the bonding being coherent via the elastomer body (3),
**characterized in that** the frame (1) has at least one spacer element (5) **which protrudes into the filter pocket (2)** and which prevents contact between the opposite walls of the filter pocket (2), where the spacer element (5) and the reinforcement element (4) are configured as a single unit comprising both.

2. Filter element according to Claim 1, where the elastomer body (3) has been cast onto the filter pocket (2).

3. Filter element according to at least one of the preceding claims, where the elastomer body (3) comprises at least one polyurethane.

4. Filter element according to at least one of the preceding claims, where the Shore A hardness of the elastomer present in the elastomer body (3) is 10 to 50.

5. Filter element according to at least one of the preceding claims, wherein the spacer element (5) connects two opposite sides or two corners of the frame (1), the spacer element (5) here preferably being foldable.

6. Filter element according to at least one of the preceding claims, where the elastomer body (3) is at least to some extent configured in the form of a sealing lip (7) running around the periphery.

7. Filter element according to at least one of the preceding claims, where the reinforcement element (4) comprises at least one metal and/or at least one thermoplastic and/or at least one thermoset.

8. Filter element according to at least one of the preceding claims, where the filter pocket (2) comprises at least one nonwoven fabric.

9. Use of a filter element according to at least one of Claims 1 to 8 for the separation of water and/or dusts, fertilizers, herbicides or insecticides from air.

10. Use of a filter element according to at least one of Claims 1 to 8 for the filtration of air, where this flows through the filter element from the direction of the closed end of the filter pocket to the open end of the filter pocket.

11. Device, comprising a filter element according to at least one of Claims 1 to 8 and an air line element and/or a motor.

## Revendications

1. Élément filtrant, comprenant un cadre (1) et une poche filtrante (2), le cadre (1) présentant un corps élastomère périphérique (3) dans lequel un élément de renforcement (4) est incorporé, le cadre (1) étant relié à l'ouverture de la poche filtrante (2), la liaison étant réalisée par liaison de matière par le corps élastomère (3),
**caractérisé en ce que** le cadre (1) présente au moins un élément d'écartement (5) qui fait saillie dans la poche filtrante (2) et qui empêche un contact avec les parois opposées de la poche filtrante (2), l'élément d'écartement (5) et l'élément de renforcement (4) étant réalisés d'une seule pièce l'un avec l'autre.

2. Élément filtrant selon la revendication 1, dans lequel le corps élastomère (3) est moulé sur la poche filtrante (2).

3. Élément filtrant selon au moins l'une des revendications précédentes, dans lequel le corps élastomère (3) contient au moins un polyuréthane.

4. Élément filtrant selon au moins l'une des revendications précédentes, dans lequel l'élastomère contenu dans le corps élastomère (3) présente une dureté Shore A de 10 à 50.

5. Élément filtrant selon au moins l'une des revendications précédentes, dans lequel l'élément d'écartement (5) relie deux faces opposées ou deux coins du cadre (1), l'élément d'écartement (5) étant de préférence rabattable.

6. Élément filtrant selon au moins l'une des revendications précédentes, dans lequel le corps élastomère (3) est réalisé au moins en partie sous la forme d'une lèvre d'étanchéité périphérique (7).

7. Élément filtrant selon au moins l'une des revendications précédentes, dans lequel l'élément de renforcement (4) contient au moins un métal et/ou au moins une matière thermoplastique et/ou au moins une résine thermodurcissable.

8. Élément filtrant selon au moins l'une des revendications précédentes, dans lequel la poche filtrante (2) comprend au moins un non-tissé.

9. Utilisation d'un élément filtrant selon au moins l'une des revendications 1 à 8, pour séparer de l'eau et/ou des poussières, des fertilisants, des herbicides ou des insecticides de l'air.

10. Utilisation d'un élément filtrant selon au moins l'une des revendications 1 à 8, pour filtrer l'air, ledit air passant par l'élément filtrant depuis la direction de l'extrémité fermée de la poche filtrante vers l'extrémité ouverte de la poche filtrante.

11. Dispositif, comprenant un élément filtrant selon au moins l'une des revendications 1 à 8 et un élément de canalisation d'air et/ou un moteur.
